# EUROPÄISCHE PATENTANMELDUNG

(11) **EP 0 789 484 A2**
(43) Veröffentlichungstag der Anmeldung: **13.08.1997**
(21) Anmeldenummer: 96109112.1
(22) Anmeldetag: 07.06.1996
(51) Int. Cl.: H04N 1/327

(54) **Verfahren und Vorrichtung zur Telefon-Fax-Umschaltung**

(30) Priorität: 10.02.1996 DE 19604875
(71) Anmelder: Deutsche Telekom AG, 53113 Bonn (DE)
(72) Erfinder: Dihlmann, Klaus Dieter, Dipl. Ing., 64839 Münster Altheim (DE); Braun, Peter, 64846 Gross-Zimmern (DE); Buck, Gerhard, 72406 Bisingen (DE); Ramaiser, Hans, 72070 Tübingen (DE)

(57) **Zusammenfassung**

Bekannte Fax-Umschaltungen erfordern zusätzliche externe Speisung, Veränderungen der vorhandenen telekommunaktiven Peripherie, bzw. Einstellungen oder Programmierungen.

Dieses Problem löst ein direkt an die Amtsleitung angeschlossenes Vorschaltegerät, in dem eine Ruferkennung mit Schaltkomponente, eine Schaltstufe eine Fax-Ruferkennung (CNG), eine in die Amtsleitung eingeschleifte Stromversorgung und Schleifenstromerkennungen enthalten sind, indem zunächst das Fax-Gerät nach definierter Zeit abgeschaltet wird, dir Rufwechselspannung aber für Schaltroutinen weiter verwendet wird, bei dem die Faxtonerkennung bei andersartiger Verbindung (z. B. Anrufbeantworter) bestehen bleibt und nach einer Fax-Erkennung umgeschaltet wird.

Die Anwendung der Erfindung ist bei allen Endeinrichtungen möglich, für die keine aufwendigeren kleinen Telekommunikations-Anlagen eingesetzt werden sollen.

## Beschreibung

Die Erfindung bezieht sich auf ein Verfahren zur Telefon-Fax-Umschaltung der im Oberbegriff des Patentanspruchs 1 näher bezeichneten Art und auf eine Vorrichtung zur Telefon-Fax-Umschaltung, wie sie im Oberbegriff des Patentanspruchs 2 definiert ist. Derartige Verfahren und Vorrichtungen sind in vielfältiger Ausführung in der einschlägigen Literatur beschrieben und im Handel erhältlich.

Zur Unterstützung und dem gleichzeitigen Betrieb von mehreren Diensten, der Sprachübertragung einerseits und des Faxdienstes andererseits sind viele Geräte bekannt, die den wahlweisen Betrieb von Fax- und Telefon-Endeinrichtungen mit Einschränkungen an einem Fernmeldeanschluß ermöglichen. Diese Geräte sind entweder in kombinierten Fax-/Telefon-Endgeräten enthalten, als getrennte Vorschaltgeräte ausgeführt oder in kleinen Telekommunikations-Anlagen integriert und sind relativ teuer und bedürfen immer einer andauernden externen Stromversorgung, bei Vorschaltgeräten meist mittels Steckernetzteil.

Im analogen Endgerätebereich werden vielfach an einem Teilnehmeranschluß mehrere Telefon-Endeinrichtungen, Telekommunikations-Anlagen mit oder ohne Zusatzfunktionen und Anrufbeantworter betrieben, die vielfach auch noch eine dauernden Stromversorgung erfordern und zusammen mit einem Fax-Gerät an einem analogen Wählanschluß vom Handling her auch noch nebeneinander funktionieren sollen. Vielfach entstehen gegenseitige Beeinträchtigungen, insbesondere von Fax-Gerät und Anrufbeantworter, und eine Mehrzahl ständiger Stromverbraucher verursachen beachtliche Kosten.

Der Erfindung liegt die Aufgabe zugrunde, diese Kosten zu verringern und eine Telefon-Fax-Umschaltungsmöglichkeit für eine Anschaltung am analogen Network Terminator Übergabepunkt ohne zusätzliche externe Speisung, ohne Veränderungen der vorhandenen telekommunaktiven Peripherie und ohne das Erfordernis von Einstellungen oder Programmierungen anzugeben.

Die Erfindung löst diese Aufgabe mit den im Kennzeichen des Patentanspruchs 1 aufgeführten Verfahrensschritten.

Eine geeignete Vorrichtung für die Lösung dieser Aufgabe ist im Kennzeichen des Patentanspruchs 2 beschrieben.

Die Erfindung und ihre Wirkungsweise wird nachstehend anhand von Ausführtrngsbeispielen näher beschrieben. In der zugehörigen Zeichnung zeigen die:
- Fig. 1: eine schematische Darstellung der Anschaltebedingungen,
- Fig. 2: die zugehörige elektrische Beschaltung der NT-Dose und
- Fig. 3: ein Blockschltbild zur Erklärung des Verfahrens und der Vorrichtung.

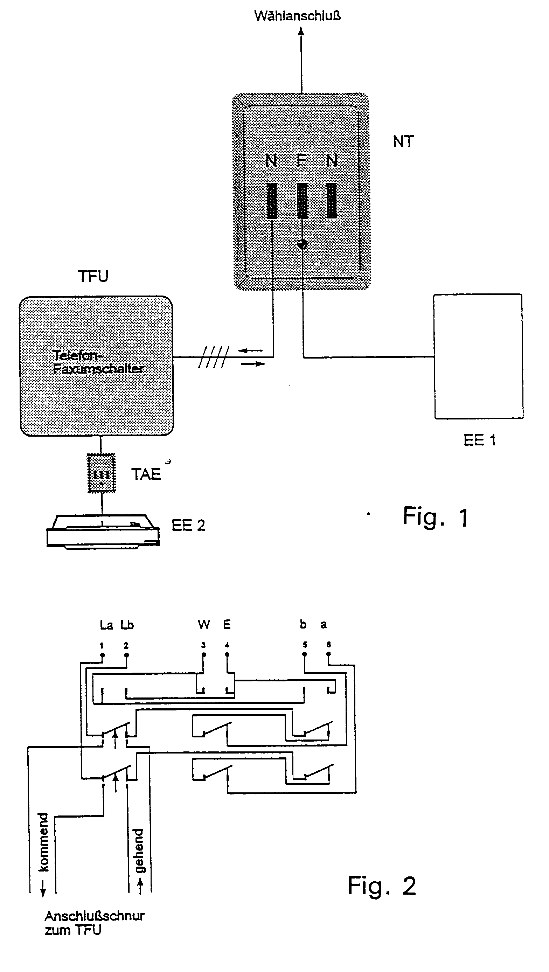

Bei den in Fig. 1 dargestellten Anschaltebedingungen ist die Einfügung eines Telefon-Fax-Umschalters TFU zwischen den analogen Netzanschluß NT und eine für den Anschluß eines Fax-Gerätes EE 2 vorgesehene Anschlußdose TAE gezeigt. Ein weiterer Anschluß EE 1 ist für weitere Telefon-Endeinrichtungen, z.B. Telefon, Telefon mit Zusatzfunktionen oder eine kleine Telekommunikations-Anlage einschließlich einem Telefon-Anrufbeantworter, vorgesehen.

Die Anschaltung der Fax-Endeinrichtung erfolgt direkt am Telefon-Fax-Umschalter TFU. Die zum Betrieb des Telefon-Fax-Umschalters TFU benötigte Energie wird aus dem Rufstrom, erforderlichenfalls über Stromwandler, und/oder der Speisespannung der Vermittlungsstelle an La/Lb, für höhere Ströme durch einen Ladekondensator gestützt, gewonnen.

Das in Fig. 2 dargestellte Schaltschema zeigt die innere elektrische Beschaltung der Netzanschlußdose NT mit der Verbindung zum Telefon-Fax-Umschalter TFU über eine vieradrige Anschlußschnur.

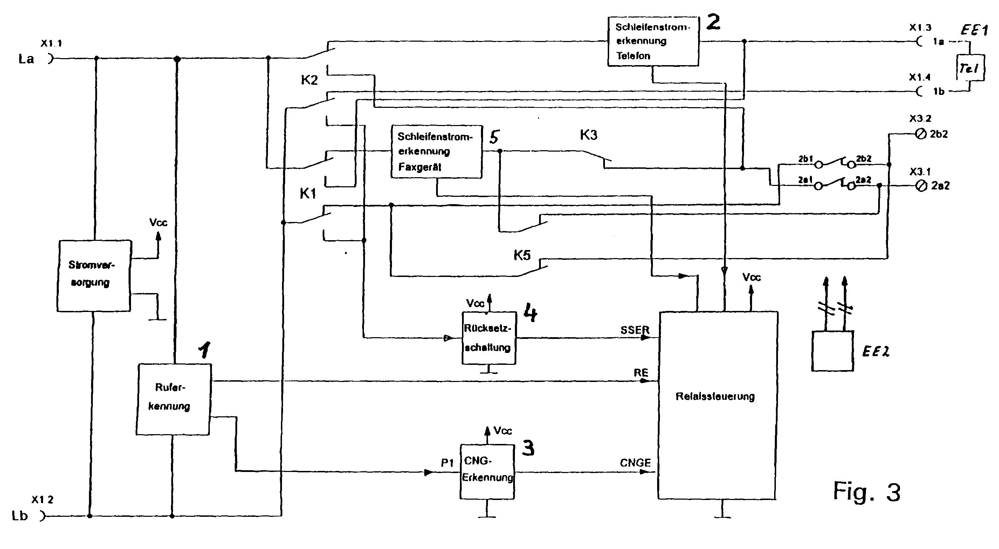

Das in Fig. 3 dargestellte Blockschaltbild dient zur Erklärung des Verfahrens und der Vorrichtung und stellt nur eine von vielen möglichen Realisierungsvarianten dar.

Bei ankommenden Rufen werden mit dem ersten Rufwechsel beide Endeinrichtungen EE1 und EE2 gerufen, wobei die Ruferkennung 1 mit dem angeschlossenen Relais K3 die Endeinrichtung EE2, die über den TFU angeschaltet ist, nach ca. 100ms abschaltet. Die Endeinrichtung EE2 ist aber nach dem ersten Ruf in einen empfangsbereiten Zustand übergegangen und wird noch über die Kontakte K1 und K5 mit Rufspannung versorgt. Beim Ansprechen der Schleifenstromerkennung Telefon 2 wird dieser Ruf jedoch abgeschaltet. Die Energie (Spannung Vcc), die der Telefon-Fax-Umschalter TFU für das weitere zeitlich begrenzte Handling (Schaltroutinen) benötigt, wird aus der Schleifenspannung La - Lb gewonnen.

Wird eine Verbindung durch die Endeinrichtung EE1 hergestellt, d. h. Schleifenstrom Telefon erkannt, wird die CNG-(Connector for Line/trunk group)-Erkennung 3 aktiv.

Im Falle einer CNG-Erkennung 3 wird die Rücksetzschaltung 4 für Rücksetzen und Umschalten aktiv, d. h. die Endeinrichtung EE2 wird aktiv geschaltet, K3-Relais wird zurückgesetzt und die Endeinrichtung EE1 wird inaktiv geschaltet (K2-Ralais wird gesetzt).

Wird die Faxkommunikation beendet, d. h., es wird durch die Schleifenstromerkennung Faxgerät 5 kein Schleifenstrom mehr erkannt, das K2-Relais wird zurückgesetzt. Der Ausgangszustand ist wieder hergestellt.

Die wesentlichen Vorteile der Erfindung sind:
- Der Telefon-Fax-Umschalter TFU findet seine Anschaltemöglichkeiten am analogen Network Terminator Übergabepunkt.
- An der vorhandenen telekommunaktiven Peripherie müssen keine Veränderungen vorgenommen werden.
- Es sind keine Einstellungen oder Programmierungen an dem Telefon-Fax-Umschalter TFU vorzunehmen.
- Es wird keine zusätzlich externe Speisung benötigt.

Funktionsablauf der Telefon-Fax-Umschaltung:
1. Ankommender Ruf
   verzögertes Ansprechen K3-Relaïs nach ca. 100 ms.
   K3-Relais gesetzt, Fax wird abgeschaltet.
2. Melden Tel + AB
   Schleifenstrom vorhanden
   Auswertung CNG aktiv
3. Bei CNG: K3-Relais zurücksetzen, K2-Relais setzen
4. Fax-Betrieb
5. Fax-Betrieb Ende, Is = 0
   Rücksetzen K2-Relais,
6. Kein CNG, kein Fax-Betrieb
   kein Rücksetzen K3-Relais, kein setzen K2-Relais,
7. Ende AB bzw. Tel-Betrieb,
   Rücksetzen K3-Relais ohne Setzen von K2-Relais.

## Patentansprüche

1. Verfahren zur Telefon-Fax-Umschaltung, bei dem während einer Wartezeit die Auswertung einer Faxton-Erkennung (CNG) benutzt wird, um jeweils nur eine von mehreren verschiedenen an einen analogen Wählanschluß angeschlossenen Endeinrichtungen in Abhängigkeit von einer Signalstromauswertung mit dem Wählanschluß zu verbinden, **dadurch gekennzeichnet,**
daß
- bei ankommendem Ruf alle Endeinrichtungen zuerst gerufen und danach die Fax-Endeinrichtung (EE2) nach einer definierten Zahl von Rufwechseln, bzw. nach definierter Zeit nach dem ersten Rufwechsel, von der Amtsleitung für eine Verzögerungszeit abgeschaltet wird,
- die Rufwechselspannung während der Zeit, in der die andere(n) Telekommunikations-Endeinrichtung(en) (EE1) weiter gerufen wird bzw. werden, für das weitere zeitlich begrenzte Handling (Schaltroutinen) verwendet wird,
- die Faxton-Erkennung und amtsleitungsgeschleifte passive Stromversorgung bestehen bleibt, während eine Verbindung durch eine der anderen Telekommunikations-Endeinrichtungen (EE1) hergestellt wird, und
- die Fax-Endeinrichtung (EE2) aktiv und die andere(n) Endeinrichtung(en) (EE1) inaktiv geschaltet wird bzw. werden, wenn danach eine Faxton-Erkennung (CNG) empfangen wird.

2. Vorrichtung zur Telefon-Fax-Umschaltung an einem analogen Wählanschluß **dadurch gekennzeichnet,** daß direkt an die Amtsleitung ein Vorschaltegerät (TFU) angeschlossen ist, in dem eine Ruferkennung mit Schaltkomponente, eine Schaltstufe eine Fax-Ruferkennung (CNG), eine in die Abtsleitung eingeschleifte Stromversorgung und eine Schleifenstromerkennung enthalten sind, und die Anschlüsse für ein Fax-Gerät (EE2) und für wenigstens eine weitere Endeinrichtung (EE1) aufweist, mit welcher ein Anrufbeantworter verbunden ist.
